# EUROPEAN PATENT APPLICATION

(11) **EP 4 440 014 A1**
(43) Date of publication of application: **02.10.2024**
(21) Application number: 22909546.8
(22) Date of filing: 03.11.2022
(51) Int. Cl.: H04L 1/00, H04L 12/28

(54) **METHODS, APPARATUSES, DEVICES AND SYSTEMS FOR GENERATING AND PROCESSING ETHERNET FRAME, AND STORAGE MEDIUM**

(30) Priority: 22.12.2021 CN 202111576632; 10.01.2022 CN 202210023650
(71) Applicant: Huawei Technologies Co., Ltd., Shenzhen, Guangdong 518129 (CN)
(72) Inventor: HE, Xiang, Shenzhen, Guangdong 518129 (CN); WANG, Tongtong, Shenzhen, Guangdong 518129 (CN); WANG, Xinyuan, Shenzhen, Guangdong 518129 (CN)
(74) Representative: Körber, Martin Hans
(86) International application number: PCT/CN2022/129600
(87) International publication number: WO 2023/116229

(57) **Abstract**

This application discloses a method and an apparatus for generating an Ethernet frame, a method and an apparatus for processing an Ethernet frame, a device, a system, and a storage medium, and belongs to the communication field. The method for generating an Ethernet frame includes: generating the Ethernet frame including a protection field, where a protection range of the protection field includes a destination MAC address field in the Ethernet frame. The method for processing an Ethernet frame includes: receiving a plurality of bytes in the Ethernet frame, where the plurality of bytes include information about the destination MAC address field and information about the protection field; and checking information within the protection range of the protection field based on the information about the protection field. A location of the protection field in the Ethernet frame is before a location of an FCS field of the Ethernet frame in the Ethernet frame. The generated Ethernet frame includes the protection field. When a byte of the Ethernet frame is sent in a CTF manner, a destination MAC address may be checked using the protection field, to avoid forwarding data of an incorrect destination MAC address, thereby improving forwarding reliability of CTF.

## Description

This application claims priority to Chinese Patent Application No. 202111576632.9, filed on December 22, 2021 and entitled "METHOD FOR GENERATING ETHERNET FRAME, DEVICE, NETWORK SYSTEM, AND COMPUTER-READABLE STORAGE MEDIUM", and priority to Chinese Patent Application No. 202210023650.2, filed on January 10, 2022 and entitled "METHOD AND APPARATUS FOR GENERATING ETHERNET FRAME, METHOD AND APPARATUS FOR PROCESSING ETHERNET FRAME, DEVICE, SYSTEM, AND STORAGE MEDIUM", which are incorporated by reference in their entireties.

### TECHNICAL FIELD

This application relates to the communication field, and in particular, to a method and an apparatus for generating an Ethernet frame, a method and an apparatus for processing an Ethernet frame, a device, a system, and a storage medium.

### BACKGROUND

In the communication field, a data packet communicated over an Ethernet link is referred to as an Ethernet packet (Ethernet packet). A start part of the Ethernet packet includes a preamble (preamble) and a start of frame delimiter (start of frame delimiter, SFD) field, followed by an Ethernet frame (Ethernet Frame) and an inter-packet gap (inter-packet gap, IPG). The Ethernet frame includes a destination media access control (media access control, MAC) address field and a source MAC address field. A middle part of an Ethernet frame is a payload field, which includes a data packet with another protocol header. The Ethernet frame ends with a frame check sequence (frame check sum, FCS) field. The FCS field is used to check whether data transmission is damaged.

During Ethernet application, a normal forwarding operation is performed only after the entire Ethernet frame is received and FCS check is passed and completed. As a result, a delay is greatly affected by a length of the Ethernet frame. Therefore, a cut-through forwarding (cut-through forwarding, CTF) technology is developed. CTF prevents the length of the Ethernet frame from affecting the forwarding delay. However, if a bit error occurs in the destination MAC address field, the Ethernet frame is redirected to an incorrect address, thereby affecting overall reliability of a system.

### SUMMARY

This application provides a method and an apparatus for generating an Ethernet frame, a method and an apparatus for processing an Ethernet frame, a device, a system, and a storage medium, to resolve a problem of reliability of Ethernet frame transmission.

According to a first aspect, a method for generating an Ethernet frame is provided, where the method includes: generating the Ethernet frame, where the Ethernet frame includes a protection field, a protection range of the protection field includes a destination media access control MAC address field in the Ethernet frame, and a location of the protection field in the Ethernet frame is before a location of a frame check sequence FCS field of the Ethernet frame in the Ethernet frame.

The generated Ethernet frame includes the protection field. Because the protection range of the protection field includes the destination MAC address field in the Ethernet frame, and the location of the protection field in the Ethernet frame is before the location of the FCS field in the Ethernet frame, when a byte of the Ethernet frame is sent in a CTF manner, the destination MAC address may be checked using the protection field, to avoid forwarding data of an incorrect destination MAC address, thereby improving forwarding reliability of CTF.

In a possible implementation, the location of the protection field in the Ethernet frame is determined based on a location of a target field, and the location of the target field is before the location of the protection field in the Ethernet frame. The location of the protection field is determined using the target field whose location is before the location of the protection field in the Ethernet frame, which has high flexibility.

In a possible implementation, the target field is a start of frame delimiter SFD field.

In a possible implementation, the Ethernet frame further includes an Ethernet type field, and the Ethernet type field indicates the location of the protection field in the Ethernet frame.

In a possible implementation, the protection range further includes a source MAC address field and/or the Ethernet type field. In addition to the destination MAC address, the protection range further includes the source MAC address field and/or the Ethernet type field, so that protection is more comprehensive.

In a possible implementation, the Ethernet frame further includes at least one tag field.

In a possible implementation, the protection range further includes the at least one tag field. Because the protection range further includes the at least one tag field, the protection is more comprehensive.

In a possible implementation, information about the protection field is obtained by performing cyclic redundancy check CRC calculation on information within the protection range.

In a possible implementation, information about the protection field is obtained by performing forward error correction FEC code calculation on information within the protection range.

The information obtained by performing CRC or FEC code calculation on the information within the protection range is used as the information about the protection field, so that the information within the protection range can be checked based on the information about the protection field, thereby improving reliability of Ethernet frame transmission.

In a possible implementation, the protection field is located in a payload field in the Ethernet frame. Alternatively, the protection field and the payload field in the Ethernet frame are independent of each other, in other words, the protection field and the payload field belong to two different fields.

In a possible implementation, after the generating the Ethernet frame, the method further includes: sending the Ethernet frame.

According to a second aspect, a method for processing an Ethernet frame is provided, where the method includes: receiving a plurality of bytes in the Ethernet frame, where the plurality of bytes include information about a destination media access control MAC address field and information about a protection field; and checking information within a protection range of the protection field based on the information about the protection field, where the protection range includes the destination MAC address field, and a location of the protection field in the Ethernet frame is before a location of a frame check sequence FCS field of the Ethernet frame in the Ethernet frame.

After the plurality of bytes in the Ethernet frame are received, because the plurality of bytes include the protection field, the protection range of the protection field includes the destination MAC address field in the Ethernet frame, and the location of the protection field in the Ethernet frame is before the location of the FCS field in the Ethernet frame, the destination MAC address field may be protected using the protection field, to avoid forwarding data of an incorrect destination MAC address, thereby improving reliability of Ethernet frame forwarding.

In a possible implementation, after the checking information within a protection range of the protection field based on the information about the protection field, the method further includes: in response to that the information within the protection range passes the check, forwarding the plurality of bytes based on the information about the destination MAC address field.

Because the information within the protection range passes the check, and no error occurs in the information within the protection range, the plurality of bytes are forwarded based on the information about the destination MAC address field, thereby ensuring the forwarding reliability.

In a possible implementation, in response to that the information within the protection range does not pass the check, the Ethernet frame is discarded. Because the information within the protection range does not pass the check, in other words, an error may occur in the information within the protection range, the information is discarded, to prevent a subsequent device from receiving error information.

In a possible implementation, after the checking information within a protection range of the protection field based on the information about the protection field, the method further includes: in response to that the information within the protection range does not pass the check, after receiving all bytes of the Ethernet frame, checking the Ethernet frame based on information about the FCS field; and in response to that the Ethernet frame passes the check, forwarding the Ethernet frame based on the information about the destination MAC address field.

Because the information within the protection range does not pass the check, and the error may occur in the information within the protection range, the forwarding is suspended, and remaining bytes of the Ethernet frame may continue to be received. After all the bytes of the Ethernet frame are received, the Ethernet frame is checked based on the information about the FCS field. If the Ethernet frame passes the check, the Ethernet frame is forwarded based on the information about the destination MAC address field. In this case, although the entire Ethernet frame is received and then forwarded as a whole, and a delay is increased in comparison with a CTF manner, accuracy of the Ethernet frames is ensured, thereby ensuring the reliability of the Ethernet frame forwarding.

In a possible implementation, in response to that the information within the protection range does not pass the check, after all the bytes of the Ethernet frame are received, the Ethernet frame is checked based on the information about the FCS field; and in response to that the Ethernet frame does not pass the check, the Ethernet frame is discarded.

Because the information within the protection range does not pass the check, and the error may occur in the information within the protection range, the forwarding is suspended, and the remaining bytes of the Ethernet frame may continue to be received. After all the bytes of the Ethernet frame are received, the Ethernet frame is checked based on the information about the FCS field. Because the Ethernet frame still does not pass the check, the Ethernet frame is discarded, to prevent the subsequent device from receiving the error information.

In a possible implementation, before the checking information within a protection range of the protection field based on the information about the protection field, the method further includes:
determining the location of the protection field in the Ethernet frame based on a location of a target field, where the location of the target field is before the location of the protection field in the Ethernet frame.

In a possible implementation, the target field is a start of frame delimiter SFD field.

In a possible implementation, the Ethernet frame further includes an Ethernet type field, and the Ethernet type field indicates the location of the protection field in the Ethernet frame.

Before the checking information within a protection range of the protection field based on the information about the protection field, the method further includes:
determining the location of the protection field in the Ethernet frame based on the Ethernet type field.

In a possible implementation, the protection range further includes a source MAC address field and/or the Ethernet type field.

In a possible implementation, the Ethernet frame further includes at least one tag field.

In a possible implementation, the protection range further includes the at least one tag field.

In a possible implementation, the information about the protection field is obtained by performing cyclic redundancy check CRC calculation on the information within the protection range.

In a possible implementation, the information about the protection field is obtained by performing forward error correction FEC code calculation on the information within the protection range.

In a possible implementation, the protection field is located in a payload field in the Ethernet frame.

According to a third aspect, an apparatus for generating an Ethernet frame is provided, where the apparatus includes:
a generation module, configured to generate the Ethernet frame, where the Ethernet frame includes a protection field, a protection range of the protection field includes a destination media access control MAC address field in the Ethernet frame, and a location of the protection field in the Ethernet frame is before a location of a frame check sequence FCS field of the Ethernet frame in the Ethernet frame.

In a possible implementation, the location of the protection field in the Ethernet frame is determined based on a location of a target field, and the location of the target field is before the location of the protection field in the Ethernet frame.

In a possible implementation, the target field is a start of frame delimiter SFD field.

In a possible implementation, the Ethernet frame further includes an Ethernet type field, and the Ethernet type field indicates the location of the protection field in the Ethernet frame.

In a possible implementation, the protection range further includes a source MAC address field and/or the Ethernet type field.

In a possible implementation, the Ethernet frame further includes at least one tag field.

In a possible implementation, the protection range further includes the at least one tag field.

In a possible implementation, information about the protection field is obtained by performing cyclic redundancy check CRC calculation on information within the protection range.

In a possible implementation, information about the protection field is obtained by performing forward error correction FEC code calculation on information within the protection range.

In a possible implementation, the protection field is located in a payload field in the Ethernet frame.

In a possible implementation, the apparatus further includes:
a sending module, configured to send the Ethernet frame.

According to a fourth aspect, an apparatus for processing an Ethernet frame is provided, where the apparatus includes:
a receiving module, configured to receive a plurality of bytes in the Ethernet frame, where the plurality of bytes include information about a destination media access control MAC address field and information about a protection field; and
a checking module, configured to check information within a protection range of the protection field based on the information about the protection field, where the protection range includes the destination MAC address field, and a location of the protection field in the Ethernet frame is before a location of a frame check sequence FCS field of the Ethernet frame in the Ethernet frame.

In a possible implementation, the apparatus further includes:
a first forwarding module, configured to: in response to that the information within the protection range passes the check, forward the plurality of bytes based on the information about the destination MAC address field.

In a possible implementation, the checking module is further configured to: in response to that the information within the protection range does not pass the check, after receiving all bytes of the Ethernet frame, check the Ethernet frame based on information about the FCS field.

The apparatus further includes: a second forwarding module, configured to: in response to that the Ethernet frame passes the check, forward the Ethernet frame based on the information about the destination MAC address field.

In a possible implementation, the checking module is further configured to determine the location of the protection field in the Ethernet frame based on a location of a target field, where the location of the target field is before the location of the protection field in the Ethernet frame.

In a possible implementation, the target field is a start of frame delimiter SFD field.

In a possible implementation, the Ethernet frame further includes an Ethernet type field, and the Ethernet type field indicates the location of the protection field in the Ethernet frame.

The checking module is further configured to determine the location of the protection field in the Ethernet frame based on the Ethernet type field.

In a possible implementation, the protection range further includes a source MAC address field and/or the Ethernet type field.

In a possible implementation, the Ethernet frame further includes at least one tag field.

In a possible implementation, the protection range further includes the at least one tag field.

In a possible implementation, the information about the protection field is obtained by performing cyclic redundancy check CRC calculation on the information within the protection range.

In a possible implementation, the information about the protection field is obtained by performing forward error correction FEC code calculation on the information within the protection range.

In a possible implementation, the protection field is located in a payload field in the Ethernet frame.

According to a fifth aspect, a network device is provided, where the network device includes a processor, the processor is coupled to a memory, the memory stores at least one program instruction or code, and the at least one program instruction or the code is loaded and executed by the processor, to enable the network device to implement the method according to any one of the first aspect or the second aspect.

According to a sixth aspect, a system for processing an Ethernet frame is provided, where the system includes a first network device and a second network device, the first network device is configured to perform the method according to any one of the first aspect, and the second network device is configured to perform the method according to any one of the second aspect.

According to a seventh aspect, a computer-readable storage medium is provided, where the storage medium stores at least one program instruction or code; and when the program instruction or the code is loaded and executed by a processor, a computer is enabled to implement the method according to any one of the first aspect or the second aspect.

According to an eighth aspect, a chip is provided, and includes a processor, where the processor is configured to implement the method according to any one of the first aspect or the second aspect.

According to a ninth aspect, a device is further provided, and includes the chip according to the eighth aspect.

In a possible implementation, the device is a network device.

In a possible implementation, the device is a router, a switch, or a server.

According to a tenth aspect, a network system is provided, and includes the device according to any one of the ninth aspect.

According to an eleventh aspect, a computer program (product) is provided, and includes a computer program or code, where when the computer program or the code is executed by a computer, the computer is enabled to perform the method according to any one of the first aspect or the second aspect.

According to a twelfth aspect, a data structure is provided, and includes an Ethernet frame, where the Ethernet frame includes a protection field, a protection range of the protection field includes a destination media access control MAC address field in the Ethernet frame, and a location of the protection field in the data structure is before a location of a frame check sequence FCS field of the Ethernet frame in the data structure.

Another communication apparatus is provided, where the apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal and control the transceiver to send a signal. In addition, when the processor executes the instructions stored in the memory, the processor is enabled to perform the method according to any one of the first aspect or the possible implementations of the first aspect, or the method according to any one of the second aspect or the possible implementations of the second aspect.

In an example embodiment, there are one or more processors, and there are one or more memories.

In an example embodiment, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into a same chip, or may be separately disposed in different chips. A type of the memory and a manner in which the memory and the processor are disposed are not limited in embodiments of this application.

A chip is provided, and includes a processor. The chip is configured to invoke, from a memory, and run instructions stored in the memory, to enable a communication device with the chip installed to perform the methods in the foregoing aspects.

Another chip is provided, and includes an input interface, an output interface, a processor, and a memory. The input interface, the output interface, the processor, and the memory are connected to each other through an internal connection path. The processor is configured to execute code in the memory. When the code is executed, the processor is configured to perform the methods in the foregoing aspects.

### BRIEF DESCRIPTION OF DRAWINGS

FIG. 1 is a diagram of an implementation environment according to an embodiment of this application;
FIG. 2 is a diagram of a structure of an Ethernet frame according to an embodiment of this application;
FIG. 3 is a diagram of a structure of another Ethernet frame according to an embodiment of this application;
FIG. 4 is a diagram of a structure of another Ethernet packet according to an embodiment of this application;
FIG. 5 is a diagram of a structure of another Ethernet packet according to an embodiment of this application;
FIG. 6 is a flowchart of a method for generating an Ethernet frame according to an embodiment of the present invention;
FIG. 7 is a diagram of a structure of another Ethernet packet according to an embodiment of this application;
FIG. 8 is a diagram of a structure of another Ethernet packet according to an embodiment of this application;
FIG. 9 is a diagram of a structure of another Ethernet packet according to an embodiment of this application;
FIG. 10 is a diagram of another implementation environment according to an embodiment of this application;
FIG. 11 is a flowchart of a method for processing an Ethernet frame according to an embodiment of this application;
FIG. 12 is a diagram of a structure of an apparatus for generating an Ethernet frame according to an embodiment of this application;
FIG. 13 is a diagram of a structure of an apparatus for processing an Ethernet frame according to an embodiment of this application;
FIG. 14 is a diagram of a structure of a network device according to an embodiment of this application;
FIG. 15 is a diagram of a structure of a network device according to an embodiment of this application; and
FIG. 16 is a diagram of a structure of a network device according to an embodiment of this application.

### DESCRIPTION OF EMBODIMENTS

To make the objectives, technical solutions, and advantages of this application clearer, the following further describes the implementations of this application in detail with reference to the accompanying drawings.

Terms used in implementations of this application are only used to explain embodiments of this application, and are not intended to limit this application. The following describes embodiments of the present invention with reference to accompanying drawings.

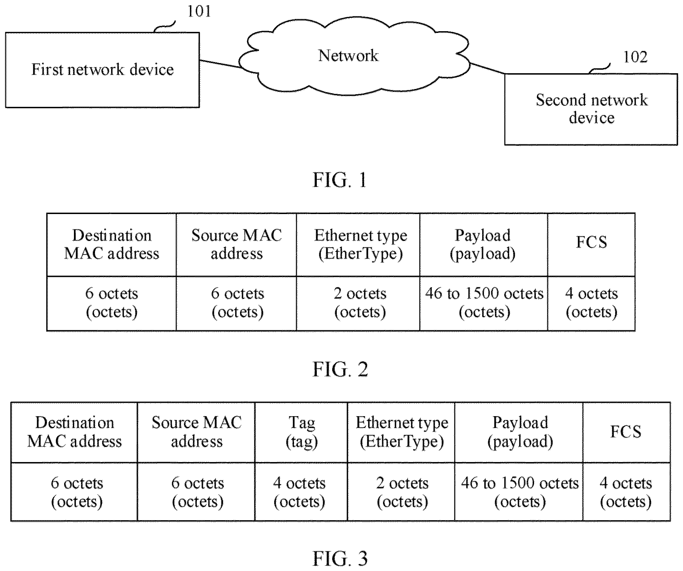

With the development of communication technologies, data transmission manners are increasing, and data transmission through an Ethernet link is one of the data transmission manners. A data packet communicated over an Ethernet link is referred to as an Ethernet packet, and the Ethernet packet includes an Ethernet frame. An implementation environment shown in FIG. 1 is used as an example, a first network device 101 may generate an Ethernet frame, and transmit the Ethernet frame with a second network device 102. The first network device 101 and the second network device 102 may be directly connected, or may be connected through a network as shown in FIG. 1. Optionally, the first network device 101 and the second network device 102 may be devices such as routers, switches, or servers that have data transmission requirements. Types of the first network device 101 and the second network device 102 are not limited in embodiments of this application.

As shown in FIG. 2, a data structure or a frame format of an Ethernet frame includes fields such as a destination MAC address, a source MAC address, and an Ethernet type (EtherType). A middle part of the Ethernet frame is a payload (payload) field of the frame. The payload field is used to carry data that needs to be transmitted, and the payload field includes a data packet of another protocol header. The Ethernet frame ends with an FCS field. The FCS field is used to check whether data transmission is damaged, in other words, check the complete Ethernet frame. A length of each field included in the Ethernet frame may be shown using a quantity of octets (octets) below each field in FIG. 2. For example, lengths of the destination MAC address field and the source MAC address field are both 6 octets, a length of the Ethernet type field is 2 octets, a length of the payload field is 46 to 1500 octets, and a length of the FCS field is 4 octets.

Optionally, in addition to the fields shown in FIG. 2, the Ethernet frame may further include an optional tag (tag) field, and there may be one or more tags. For example, an Ethernet frame including one tag field is used as an example, and a structure of the Ethernet frame may be shown in FIG. 3. In FIG. 3, the tag field is located between a source MAC address field and an Ethernet type field, and a length of the tag field is 4 octets, in other words, a length of 4 bytes.

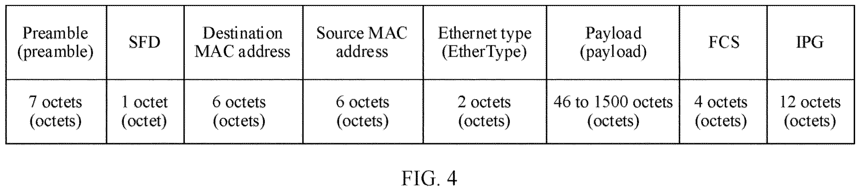

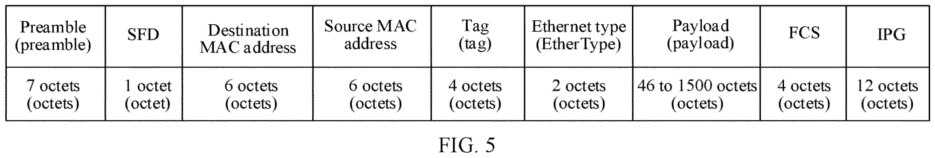

In a data transmission process, a plurality of Ethernet frames need to be transmitted, and an inter-packet gap (inter-packet gap, IPG) is needed between the Ethernet frames. To be specific, after an Ethernet frame is sent, another Ethernet frame can be sent only after a period of time, so that a receiver of the Ethernet frame performs necessary processing such as buffer adjustment and counting on the received Ethernet frame. Therefore, the Ethernet packet including the Ethernet frame not only includes a preamble field and an SFD field, but also may include an IPG. For example, for a structure of an Ethernet packet that includes an IPG field but does not include a tag field, as shown in FIG. 4, a length of a preamble field is 7 octets, in other words, a length of 7 octets, or a length of 7 bytes. A length of the SFD field is 1 octet, in other words, a length of 1 byte. A length of the IPG field is 12 octets, in other words, a length of 12 bytes. For another example, FIG. 5 shows a structure of an Ethernet packet that includes one tag field and also includes an IPG field.

Regardless of which type of Ethernet frame is used, during Ethernet application, for a normal forwarding operation, the Ethernet frame is forwarded only after the entire Ethernet frame is received and FCS check is passed. As a result, an overall delay is greatly affected by a length of the Ethernet frame. For example, on a 10 gigabit Ethernet (Gigabit Ethernet, GE) interface, for a 64-byte Ethernet frame, a delay caused by receiving the Ethernet frame is approximately 72*8/10 = 57.6 ns (nanoseconds), and for a 1522-byte Ethernet frame, a delay is 1.224 µ s. Therefore, a CTF technology is developed. In the CTF technology, because an Ethernet frame is forwarded before being entirely received, this prevents a length of the Ethernet frame from affecting a forwarding delay. For example, similarly, for the 10 GE interface, an Ethernet frame is forwarded after a destination MAC address is entirely received. For the 64-byte Ethernet frame, forwarding time is reduced by 58*8/10 = 46.4 ns, and the delay is reduced by 80%. For the 1522-byte Ethernet frame, the delay is reduced by up to 99%. Because the CTF technology prevents the length of the Ethernet frame from affecting the forwarding delay, the CTF technology is widely used in delay-sensitive forwarding scenarios, and is used in interface technologies, including an Ethernet (Ethernet), a fiber channel (Fibre Channel), an infinite bandwidth (InfiniBand), and the like.

However, because noise exists on a physical link, and a bit error occurs in a transmission process of information about the Ethernet frame, content of the information changes. Further, an Ethernet physical layer has different requirements on a bit error rate at different rates, and a forward error correction (forward error correction, FEC) code exists on a high-speed physical link with a high bit error rate and is used to correct the bit error, to reduce a quantity of error bits in the Ethernet frame as much as possible. The FCS field in the Ethernet frame may be further used to check and identify an error through cyclic redundancy check (cyclic redundancy check, CRC) 32, to ensure that the Ethernet frame received by an upper-layer application is correct. A probability that one Ethernet frame with an error is received is calculated using mean time to false packet acceptance (mean time to false packet acceptance, MTTFPA). The value is usually required to be much greater than an age of the universe, to be specific, >1.3×10¹⁰ years. In addition, during CTF, because data is forwarded before the FCS check is performed, if the bit error occurs in the destination MAC address field, the Ethernet frame is forwarded to an incorrect address, thereby affecting overall reliability of a system.

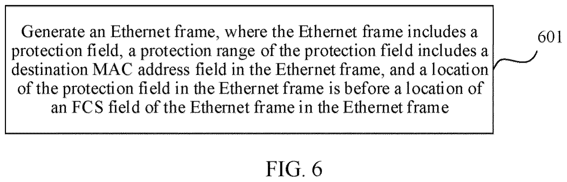

An embodiment of this application provides a method for generating an Ethernet frame. In the method, a protection field is added to improve forwarding reliability of CTF, to resolve a problem that overall reliability of a system is affected in a forwarding process of the CTF. An example in which a first network device performs the method for generating an Ethernet frame is used. Refer to FIG. 6. The method includes the following step 601.

601: Generate the Ethernet frame, where the Ethernet frame includes the protection field, a protection range of the protection field includes a destination MAC address field in the Ethernet frame, and a location of the protection field in the Ethernet frame is before a location of an FCS field of the Ethernet frame in the Ethernet frame.

In this embodiment of this application, an occasion for generating the Ethernet frame is not limited, and the Ethernet frame may be generated when data needs to be sent. For example, first data is obtained, and the Ethernet frame is generated based on the first data. When the Ethernet frame is generated based on the first data, the first data is carried in a payload field of the Ethernet frame. A manner of obtaining the first data and a type of the first data are not limited in embodiments of this application. The first data is to-be-transmitted data of any type. For example, the first data is to-be-transmitted audio data, video data, other application data, or the like. The first network device may obtain the first data from locally stored data, or may obtain the first data from data sent by another device.

In addition to the destination MAC address field, a source MAC address, an Ethernet type field, the payload field, and the FCS field, the Ethernet frame further includes the protection field. The location of the protection field in the Ethernet frame is before the location of the FCS field of the Ethernet frame in the Ethernet frame, and is used to protect information within the protection range of the protection field in the Ethernet frame. Because the protection range of the protection field includes the destination MAC address field in the Ethernet frame, when a byte of the Ethernet frame is sent in a CTF manner, the destination MAC address may be checked using the protection field, to avoid forwarding data of an incorrect destination MAC address, thereby improving the forwarding reliability of the CTF and resolving the problem that the overall reliability of the system is affected in the forwarding process of the CTF.

A length of the protection field is n bits, and n is a positive integer. The length of the protection field is not limited in embodiments of this application, and may be flexibly set based on experience or an application scenario. The location of the protection field in the Ethernet frame may be any location before the location of the FCS of the Ethernet frame in the Ethernet frame. In a possible implementation, the protection field and the payload field in the Ethernet frame are independent of each other, or the protection field is located in the payload field in the Ethernet frame, and the payload field is used to carry the first data. If the protection field is independent of the payload field, a length of the payload field is still 46 to 1500 octets. If the protection field is located in the payload field, to be specific, the protection field is a bit field extracted from the payload field, a length of a remaining payload field is (46*8-n) to (1500*8-n) bits.

In a possible implementation, the location of the protection field is determined in the following two manners, but is not limited thereto.

Location determining manner 1: The location of the protection field in the Ethernet frame is determined based on a location of a target field, and the location of the target field is before the location of the protection field in the Ethernet frame.

For the location determining manner 1, the target field may be any field whose location is before the location of the protection field in the Ethernet frame. When a length of each field in the Ethernet packet is known, and a location of each field in the Ethernet packet is also fixed, the protected field may be located based on the location of the target field, to determine the location of the protected field. The target field selected when the location of the protection field is determined is not limited in embodiments of this application. For example, the target field is an SFD field.

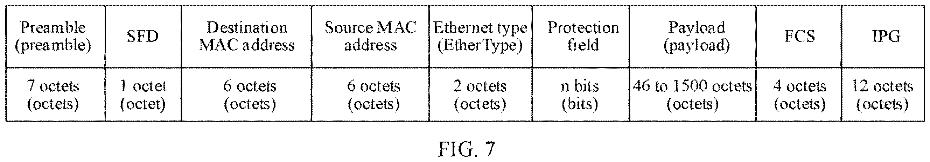

In a possible implementation, in addition to the destination MAC address field, the protection range of the protection field may further include the source MAC address field, or include the Ethernet type field, or include the source MAC address field and the Ethernet type field. For example, the protection field is located between the Ethernet type field and the payload field, and the Ethernet frame does not include a tag field. A structure of the Ethernet packet is shown in FIG. 7. Because the length of each field in the Ethernet frame is known, and the location of each field in the Ethernet frame is also fixed, the location of the protection field is 14 octets, in other words, 14 bytes backward from the SFD field. For the structure of the Ethernet packet shown in FIG. 7, the protection range of the protection field includes but is not limited to the destination MAC address field, the source MAC address field, and the Ethernet type field, that is, the protection range includes 14 bytes of information totaling 112 bits.

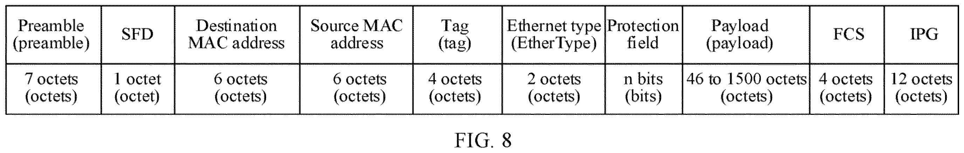

Optionally, the Ethernet frame further includes at least one tag field. In a possible implementation, the protection range of the protection field further includes the at least one tag field. For example, the protection field is located between the Ethernet type field and the payload field, and the Ethernet frame includes one tag field. A structure of the Ethernet packet is shown in FIG. 8. Because the length of each field in the Ethernet frame is known, and the location of each field in the Ethernet frame is also fixed, the location of the protection field is 18 octets, in other words, 18 bytes backward from the SFD field. For the structure of the Ethernet packet shown in FIG. 8, the protection range of the protection field includes but is not limited to the destination MAC address field, the source MAC address field, the tag field, and the Ethernet type field, that is, the protection range includes 18 bytes of information totaling 144 bits.

Optionally, if the Ethernet frame includes a plurality of tags, a length backward from the SFD field may be increased based on a quantity of tags. For example, if the Ethernet frame includes two tags, the location of the protection field is 22 octets, in other words, 22 bytes backward from the SFD field. The protection range of the protection field includes but is not limited to the destination MAC address field, the source MAC address field, the two tag fields, and the Ethernet type field, that is, the protection range includes 22 bytes of information totaling 176 bits.

Location determining manner 2: The Ethernet frame further includes the Ethernet type field, and the Ethernet type field indicates the location of the protection field in the Ethernet frame. For example, the protection field is included after the Ethernet type field, and the location of the protection field in the Ethernet frame is determined based on the Ethernet type field.

For the location determining manner 2, the Ethernet type field is a 2-byte field, and one unused Ethernet type value may be selected. For example, 0x8800 indicates that the protection field is included after the Ethernet type field. That is, the location of the protection field in the Ethernet frame is indicated using the Ethernet type field. Therefore, the location of the protection field in the Ethernet frame may be determined by determining a location of the Ethernet type field.

In this embodiment of this application, regardless of which location of the protection field in the Ethernet frame is before the location of the FCS field in the Ethernet frame, information before the location of the FCS field in the Ethernet frame can be protected, to improve the forwarding reliability of the CTF. Information about the protection field is determined in the following two manners, but is not limited thereto.

Information determining manner 1: The information about the protection field is obtained by performing CRC calculation on the information within the protection range.

A check bit may be obtained by performing CRC calculation on the information within the protection range, that is, the information about the protection field may be the check bit. Before the information determining manner 1 is described, CRC is described first. The CRC is a check mechanism used to check whether an error occurs in data (including the check bit) within the protection range after transmission. The CRC is usually generated based on an operation in a Galois field (Galois Field, GF) (2), in other words, finite field. CRC-n indicates that a length of the check bit is n bits (bits). For a check bit of a same length, that is, n bits, the check bit may be generated in a plurality of calculation manners, and the calculation manner is determined using a polynomial corresponding to the CRC. A highest degree of a polynomial of the CRC-n is n. Different polynomials may have different check capabilities. For example, a polynomial coefficient is expressed in hexadecimal notation. For CRC-8, there may be a plurality of polynomials below:

0xe7, 0xa6, 0x8e, 0xb1, 0xbf, 0x97, 0xd3, 0xcd, 0x83, 0x98, 0x9b, 0xa4, 0xea, 0x8d, 0x9c, 0xeb, 0x80, and so on.

A polynomial corresponding to 0xe7 is x^8+x^7+x^6+x^3+x^2+x+1, and coefficients corresponding to terms from x^8 to x^1 are 1110 0111, that is, 0xe7.

It should be noted that the foregoing hexadecimal expression manner is a reverses reciprocal (reversed reciprocal) expression manner. For example, 0xd3 is expressed as a binary sequence 11010011, and corresponds to polynomial exponents in descending order from left to right, that is, x^8+x^7+x^5+x^2 +x+ 1.

For CRC-n corresponding to a specific polynomial, an error detection capability (also referred to as a protection capability or a check capability) of the CRC-n is limited by characteristics such as a Hamming distance and a parity attribute that are of the CRC-n. For example, for CRC-8 corresponding to 0xe7, when a protection range of the CRC-8 is greater than 247 bits, a Hamming distance is 2 bits; when a protection range of the CRC-8 is less than or equal to 247 bits and greater than 19 bits, a Hamming distance is 3 bits; and when a protection range of the CRC-8 is less than or equal to 19 bits and greater than 1 bit, a Hamming distance is 4 bits. Table 1 below summarizes protection capabilities under conditions of Hamming distances supported by a part of the foregoing different polynomials and corresponding information bit lengths of protection ranges.

**Table 1**

| | Information bit length (k) | | | |
|---|---|---|---|---|
| Polynomial | Hamming distance of 5 | Hamming distance of 4 | Hamming distance of 3 | Hamming distance of 2 |
| 0xe7 | k = 1 | 1<k≤19 | 19<k≤247 | k>247 |
| 0xa6 | k = 1 | 1<k≤15 | 15<k≤247 | k>247 |
| 0x8e | k = 1 | 1<k≤13 | 13<k≤247 | k>247 |
| 0xb1 | k = 1 | 1<k≤12 | 12<k≤247 | k>247 |
| 0xbf | k = 1 | 3<k≤119 | 3<k≤119 | k>119 |
| 0x97 | k≤3 | 3<k≤119 | 3<k≤119 | k>119 |
| 0xd3 | k≤3 | 3<k≤119 | 3<k≤119 | k>119 |
| 0xcd | k≤2 | 3<k≤119 | 3<k≤119 | k>119 |
| 0x83 | N/A | 3<k≤119 | 3<k≤119 | k>119 |
| 0x98 | N/A | 3<k≤119 | 3<k≤119 | k>119 |

It can be seen that, for different lengths of protection ranges, selection of different polynomials may bring different protection capabilities. For example, if 120 bits of data need to be protected, a polynomial corresponding to 0x97 is used to construct the CRC-8, a Hamming distance of the CRC-8 is only 2, and the CRC-8 may ensure, within a range of 120+8 = 128 bits, a quantity of found error bits is 1. If the polynomial corresponding to 0xe7 is used to construct the CRC-8, a Hamming distance of the CRC-8 is 3, and 2 error bits may be ensured to be found in 128 bits.

For another example, if a quantity of bits that need to be protected is 118 bits, the CRC-8 constructed using a polynomial corresponding to 0x97 may ensure, within a range of 126 bits, that 3 bit errors are found. However, if 0xe7 is used, only 2 bit errors may be ensured to be found.

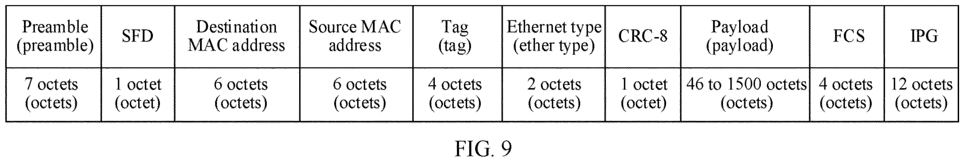

In a possible implementation, an example in which the CRC-8 is used to determine the information about the protection field is used. A structure of the Ethernet packet is shown in FIG. 9. 0xe7, 0xa6, 0x8e, or 0xb1 may be selected as a polynomial of the CRC-8, where 0xe7 corresponds to the polynomial: x^8+x^7+x^6+x^3+x^2+x+1. If the Ethernet frame includes the tag field, the protection range of the protection field totals 18 bytes, in other words, 144 bits, including the destination MAC address field, the source MAC address field, the tag field, and the Ethernet type field. If the Ethernet frame includes double tagging (double tagging), the protection range of the protection field totals 22 bytes, in other words, 176 bits, including the destination MAC address field, the source MAC address field, the double tagging field, and the Ethernet type field. The CRC may ensure, within a range of 247 bits, that a Hamming distance of the CRC is 3.

Optionally, different CRC-8 may be selected for whether there is a Tag. When the protection range is small, CRC-8 with a larger Hamming distance is used. For example, 0xbf, 0x97, 0xd3, 0xcd, 0x83, and 0x98 may provide protection under a condition of a Hamming distance of 4 within a range of 119 bits, that is, 3 bit errors may be ensured to be found. After used CRC is determined based on a length of the information within the protection range, a check bit may be obtained by performing calculation on the information within the protection range by using the selected CRC, and the check bit is the information about the protection field.

Information determining manner 2: The information about the protection field is obtained by performing FEC code calculation on the information within the protection range.

For the information determining manner 2, because an FEC code can not only detect an error, but also correct a bit error, a packet loss rate is reduced. Therefore, the information about the protection field that is obtained by performing FEC code calculation on the information within the protection range can further improve reliability. There are a plurality of code types of the FEC code. A code type of a selected FEC code is not limited in embodiments of this application, and includes but is not limited to any one of a Hamming (Hamming) code, an extended Hamming (extended Hamming, eHamming) code, a Reed-Solomon (Reed-Solomon, RS) code, a Bose-Chaudhuri-Hocquenghem (Bose-Chaudhuri-Hocquenghem, BCH) code, an extended BCH (extended BCH, eBCH) code, a Fire (fire) code, a turbo (turbo) code, and a turbo product code (turbo product code, TPC), a staircase (staircase) code, and a low-density parity-check (low-density parity-check, LDPC) code.

In a possible implementation, after the generating the Ethernet frame, the method further includes: sending the Ethernet frame. A manner of sending the Ethernet frame is not limited in embodiments of this application. For example, the Ethernet frame may be sent from a physical interface of the first network device, and transmitted to a destination end through a transmission medium. The destination end may be another network device independent of the first network device, or may be another physical interface in the first network device.

According to the method provided in this embodiment of this application, the generated Ethernet frame includes the protection field. Because the protection range of the protection field includes the destination MAC address field in the Ethernet frame, and the location of the protection field in the Ethernet frame is before the location of the FCS field in the Ethernet frame, when the byte of the Ethernet frame is sent in the CTF manner, the destination MAC address may be checked using the protection field, to avoid forwarding the data of the incorrect destination MAC address, thereby improving the forwarding reliability of the CTF.

An embodiment of this application provides a method for processing an Ethernet frame, and the method may be performed by network devices. For example, an implementation environment of the method for processing an Ethernet frame is shown in FIG. 1. In FIG. 1, after generating the Ethernet frame, a first network device 101 transmits the Ethernet frame to a second network device 102 through a network, and the second network device 102 may process the Ethernet frame by using the method for processing an Ethernet frame in this embodiment of this application. In addition, the second network device 102 may also send the Ethernet frame in a CTF manner after the Ethernet frame passes check. In this case, the method for processing an Ethernet frame in this embodiment of this application may be performed by a network device that receives the Ethernet frame and that is after the second network device 102 shown in FIG. 1. In the implementation environment shown in FIG. 1, a method for generating an Ethernet frame is implemented on the first network device 101, and the method for processing an Ethernet frame is implemented on the second network device 102. That is, the method for generating an Ethernet frame and the method for processing an Ethernet frame in embodiments of this application may be implemented on different network devices.

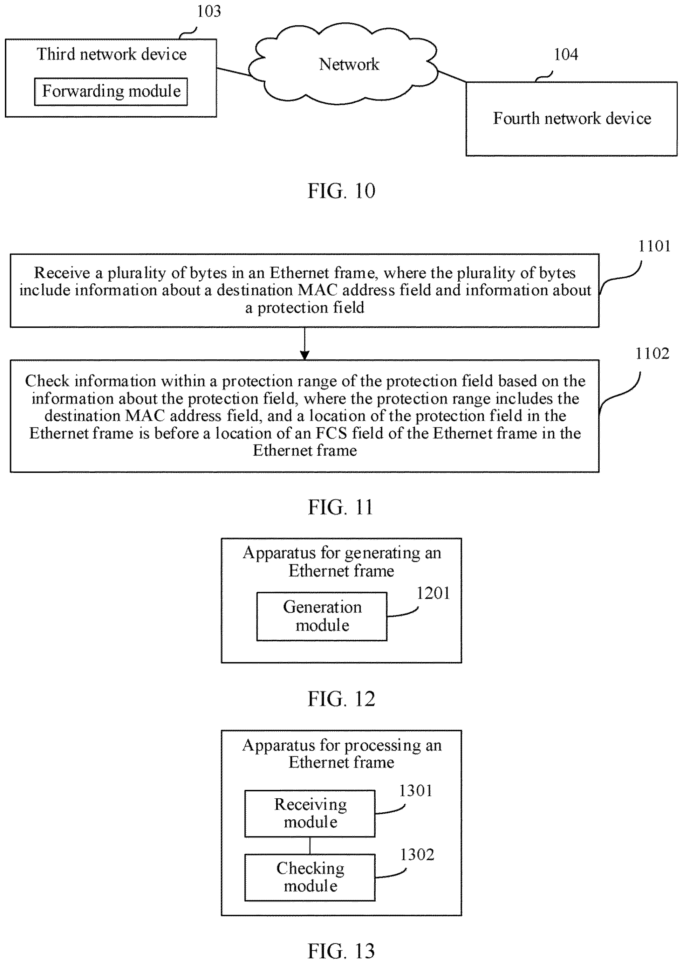

Alternatively, an implementation environment of the method may be shown in FIG. 10. FIG. 10 includes a third network device 103 and a fourth network device 104. The third network device 103 is connected to the fourth network device 104 through a network. After generating the Ethernet frame by using the method for generating an Ethernet frame shown in FIG. 6, the third network device 103 sends the Ethernet frame to a forwarding module of the third network device 103, and the forwarding module may process the Ethernet frame by using the method for processing an Ethernet frame in this embodiment of this application. That is, the method for processing an Ethernet frame may be implemented by the forwarding module in the third network device 103. In the implementation environment shown in FIG. 10, the method for generating an Ethernet frame and the method for processing an Ethernet frame are implemented in the third network device. In other words, the method for generating an Ethernet frame and the method for processing an Ethernet frame in embodiments of this application may be implemented on a same network device.

Refer to FIG. 11. The method for processing an Ethernet frame includes the following step 1101 and step 1102.

1101: Receive a plurality of bytes in the Ethernet frame, where the plurality of bytes include information about a destination MAC address field and information about a protection field.

A quantity of the received plurality of bytes in the Ethernet frame is not limited in embodiments of this application. After the information about the destination MAC address field and the information about the protection field are received, the following check step 1102 may be performed. For example, the Ethernet frame is sent in a CTF manner. To prevent the plurality of bytes from being forwarded to an incorrect address due to an error in the destination MAC address, the plurality of bytes in the Ethernet frame include the information about the destination MAC address field and the information about the protection field, to check information within a protection range by using the information about the protection field, thereby protecting the destination MAC address. For example, the implementation environment shown in FIG. 1 is used as an example. After generating the Ethernet frame, the first network device 101 sends the Ethernet frame. The second network device may receive the plurality of bytes in the Ethernet frame through a transmission medium. For another example, the implementation environment shown in FIG. 10 is used as an example. After generating the Ethernet frame, the third network device sends the Ethernet frame to the forwarding module, and the forwarding module may receive the plurality of bytes in the Ethernet frame.

The information about the protection field may be obtained by performing CRC calculation on the information within the protection field, or may be obtained by performing FEC code calculation on the information within the protection field. For details, refer to related descriptions in the embodiment shown in FIG. 6. Details are not described herein again.

1102: Check the information within the protection range of the protection field based on the information about the protection field, where the protection range includes the destination MAC address field, and the protection field is located before an FCS field of the Ethernet frame.

Before the checking the information within the protection range of the protection field based on the information about the protection field, the method further includes: determining a location of the protection field in the Ethernet frame, to obtain the information about the protection field based on the location of the protection field in the Ethernet frame. For a manner of determining the location of the protection field in the Ethernet frame, a manner of determining the protection range, and a manner of determining the information about the protection field, refer to related content in FIG. 6. Details are not described herein again.

Regardless of which manner is used to determine the location of the protection field, the information within the protection range of the protection field may be checked based on the information about the protection field. A checking manner and a checking effect vary with the manner of determining the information about the protection field.

A 10 GE link as an example. A link bit error rate is less than 10⁻¹², and a probability that bit errors greater than or equal to 3 occur in 144+8 = 152 bits is 5.7×10⁻³¹. Therefore, a probability that an error occurs but is not found in CTF checked using CRC-8 is: 5.7×10⁻³¹×2⁸ = 2.2×10⁻³³. If calculation is performed based on that a length of the Ethernet frame is 64 bytes (84 bytes if a/an preamble/SFD/IPG is included), a probability of occurrence is expected to be once every 10¹⁸ years, thereby meeting a requirement of reliability.

For example, if a BCH code whose t = 1 or 2 is selected, an error correction delay needs only one clock cycle, and is only 1 ns in a case of a 1 Hz (GHz) clock (clock), and costs are small. However, a disadvantage of the BCH code is that, when an error bit exceeds an error correction capability, erroneous correction may occur, thereby affecting the reliability to some extent. Therefore, a Hamming distance may be increased using an extended BCH code to avoid the erroneous correction.

For a 10 GE, a bit error rate, for example, BCH/Hamming (152, 144) less than 10¹² can be used to correct a 1-bit error. Using a BCH code whose t = 1 or a Hamming code may ensure that a packet loss rate is reduced by 9 to 10 orders of magnitude in comparison with the CRC-8 solution, and MTTFPA is approximately 2×10⁵ years. An enhanced BCH code (eBCH) whose t = 1 or an enhanced Hamming code (eHamming), for example, eBCH/eHamming (120, 112) can be used to correct a 1-bit error and detect a 2-bit error. In comparison with the CRC-8 solution, it may be ensured that the packet loss rate is reduced by 9 to 10 orders of magnitude, and the MTTFPA is approximately 10¹⁸ years.

After the information within the protection range of the protection field is checked based on the information about the protection field, a check result is obtained, and a corresponding processing manner is used based on the check result.

Processing manner 1: In response to that the information within the protection range passes the check, the plurality of bytes are forwarded based on the information about the destination MAC address field. For the processing manner 1, because the information within the protection range passes the check, and no error occurs in the information within the protection range, the plurality of bytes are forwarded based on the information about the destination MAC address field, thereby ensuring forwarding reliability.

Processing manner 2: In response to that the information within the protection range does not pass the check, the Ethernet frame is discarded. For the processing manner 2, because the information within the protection range does not pass the check, in other words, an error may occur in the information within the protection range, the information is discarded, to prevent a subsequent device from receiving error information.

Processing manner 3: In response to that the information within the protection range does not pass the check, after all bytes of the Ethernet frame are received, the Ethernet frame is checked based on information about the FCS field; and in response to that the Ethernet frame passes the check, the Ethernet frame is forwarded based on the information about the destination MAC address field.

For the processing manner 3, because the information within the protection range does not pass the check, and an error may occur in the information within the protection range, forwarding is suspended, and remaining bytes of the Ethernet frame may continue to be received. After all the bytes of the Ethernet frame are received, the Ethernet frame is checked based on the information about the FCS field. If the Ethernet frame passes the check, the Ethernet frame is forwarded based on the information about the destination MAC address field. In this case, although the entire Ethernet frame is received and then forwarded as a whole, and a delay is increased in comparison with the CTF manner, accuracy of the Ethernet frames is ensured, thereby ensuring reliability of Ethernet frame forwarding.

Processing manner 4: In response to that the information within the protection range does not pass the check, after all bytes of the Ethernet frame are received, the Ethernet frame is checked based on information about the FCS field; and in response to that the Ethernet frame does not pass the check, the Ethernet frame is discarded.

For the processing manner 4, because the information within the protection range does not pass the check, and an error may occur in the information within the protection range, forwarding is suspended, and remaining bytes of the Ethernet frame may continue to be received. After all the bytes of the Ethernet frame are received, the Ethernet frame is checked based on the information about the FCS field. If the Ethernet frame still does not pass the check, the Ethernet frame is discarded, to prevent a subsequent device from receiving error information.

According to the method provided in this embodiment of this application, after the plurality of bytes in the Ethernet frame are received, because the plurality of bytes include the protection field, the protection range of the protection field includes the destination MAC address field in the Ethernet frame, and the location of the protection field in the Ethernet frame is before a location of the FCS field in the Ethernet frame, the destination MAC address field may be protected using the protection field, to avoid forwarding data of an incorrect destination MAC address, thereby improving the reliability of the Ethernet frame forwarding.

In addition, in a case in which the information within the protection range does not pass the check, or the information within the protection range does not pass the check and the received Ethernet frame does not pass the check, the Ethernet frame is discarded, to prevent the subsequent device from receiving the error information.

The foregoing describes the method for generating an Ethernet frame in embodiments of this application. Corresponding to the foregoing method, an embodiment of this application further provides an apparatus for generating an Ethernet frame. FIG. 12 is a diagram of a structure of an apparatus for generating an Ethernet frame according to an embodiment of this application. The apparatus is used in a first network device or a third network device. The first network device or the third network device is the first network device or the third network device in the embodiment shown in any one of FIG. 1, FIG. 6, and FIG. 10. Based on a plurality of modules below in FIG. 12, the apparatus for generating an Ethernet frame in FIG. 12 can perform a part or all of the operations performed by the first network device or the third network device. It should be understood that the apparatus may include more additional modules than the shown modules, or a part of the shown modules are omitted. This is not limited in embodiments of this application. As shown in FIG. 12, the apparatus includes:
a generation module 1201, configured to generate the Ethernet frame, where the Ethernet frame includes a protection field, a protection range of the protection field includes a destination media access control MAC address field in the Ethernet frame, and a location of the protection field in the Ethernet frame is before a location of a frame check sequence FCS field of the Ethernet frame in the Ethernet frame.

In a possible implementation, the location of the protection field in the Ethernet frame is determined based on a location of a target field, and the location of the target field is before the location of the protection field in the Ethernet frame.

In a possible implementation, the target field is a start of frame delimiter SFD field.

In a possible implementation, the Ethernet frame further includes an Ethernet type field, and the Ethernet type field indicates the location of the protection field in the Ethernet frame.

In a possible implementation, the protection range further includes a source MAC address field and/or the Ethernet type field.

In a possible implementation, the Ethernet frame further includes at least one tag field.

In a possible implementation, the protection range further includes the at least one tag field.

In a possible implementation, the information about the protection field is obtained by performing cyclic redundancy check CRC calculation on information within the protection range.

In a possible implementation, the information about the protection field is obtained by performing forward error correction FEC code calculation on information within the protection range.

In a possible implementation, the protection field is located in a payload field in the Ethernet frame.

In a possible implementation, the apparatus further includes:
a sending module, configured to send the Ethernet frame.

According to the apparatus provided in this embodiment of this application, the generated Ethernet frame includes the protection field. Because the protection range of the protection field includes the destination MAC address field in the Ethernet frame, and the location of the protection field in the Ethernet frame is before the location of the FCS field in the Ethernet frame, when a byte of the Ethernet frame is sent in a CTF manner, the destination MAC address may be checked using the protection field, to avoid forwarding data of an incorrect destination MAC address, thereby improving forwarding reliability of CTF.

The foregoing describes the method for processing an Ethernet frame in embodiments of this application. Corresponding to the foregoing method, an embodiment of this application further provides an apparatus for processing an Ethernet frame. FIG. 13 is a diagram of a structure of an apparatus for processing an Ethernet frame according to an embodiment of this application. The apparatus may be used in a second network device or a forwarding module in a third network device. The second network device and the forwarding module in the third network device are the second network device or the forwarding module in the third network device in the embodiment shown in any one of FIG. 1, FIG. 10, and FIG. 11. Based on a plurality of modules below in FIG. 13, the apparatus for processing an Ethernet frame in FIG. 13 can perform a part or all of the operations performed by the second network device or the forwarding module in the third network device. It should be understood that the apparatus may include more additional modules than the shown modules, or a part of the shown modules are omitted. This is not limited in embodiments of this application. As shown in FIG. 13, the apparatus includes:
a receiving module 1301, configured to receive a plurality of bytes in the Ethernet frame, where the plurality of bytes include information about a destination media access control MAC address field and information about a protection field; and
a checking module 1302, configured to check information within a protection range of the protection field based on the information about the protection field, where the protection range includes the destination MAC address field, and a location of the protection field in the Ethernet frame is before a location of a frame check sequence FCS field of the Ethernet frame in the Ethernet frame.

In a possible implementation, the apparatus further includes:
a first forwarding module, configured to: in response to that the information within the protection range passes the check, forward the plurality of bytes based on the information about the destination MAC address field.

In a possible implementation, the checking module 1302 is further configured to: in response to that the information within the protection range does not pass the check, after receiving all bytes of the Ethernet frame, check the Ethernet frame based on information about the FCS field.

The apparatus further includes: a second forwarding module, configured to: in response to that the Ethernet frame passes the check, forward the Ethernet frame based on the information about the destination MAC address field.

In a possible implementation, the checking module 1302 is further configured to determine the location of the protection field in the Ethernet frame based on a location of a target field, where the location of the target field is before the location of the protection field in the Ethernet frame.

In a possible implementation, the target field is a start of frame delimiter SFD field.

In a possible implementation, the Ethernet frame further includes an Ethernet type field, and the Ethernet type field indicates the location of the protection field in the Ethernet frame.

The checking module 1302 is further configured to determine the location of the protection field in the Ethernet frame based on the Ethernet type field.

In a possible implementation, the protection range further includes a source MAC address field and/or the Ethernet type field.

In a possible implementation, the Ethernet frame further includes at least one tag field.

In a possible implementation, the protection range further includes the at least one tag field.

In a possible implementation, the information about the protection field is obtained by performing cyclic redundancy check CRC calculation on the information within the protection range.

In a possible implementation, the information about the protection field is obtained by performing forward error correction FEC code calculation on the information within the protection range.

In a possible implementation, the protection field is located in a payload field in the Ethernet frame.

It should be understood that, when the apparatuses provided in FIG. 12 to FIG. 13 above implement functions thereof, only division of the foregoing functional modules is used as an example for description. During actual application, the functions may be allocated, based on a requirement, to different functional modules for performing. That is, an internal structure of a device is divided into different functional modules, to perform a part or all of the functions described above. In addition, the apparatuses provided in the foregoing embodiments and the method embodiments belong to a same concept. For specific implementation processes thereof, refer to the method embodiments. Details are not described herein again.

According to the apparatus provided in this embodiment of this application, after the plurality of bytes in the Ethernet frame are received, because the plurality of bytes include the protection field, the protection range of the protection field includes the destination MAC address field in the Ethernet frame, and the location of the protection field in the Ethernet frame is before the location of the FCS field in the Ethernet frame, the destination MAC address field may be protected using the protection field, to avoid forwarding data of an incorrect destination MAC address, thereby improving reliability of Ethernet frame forwarding.

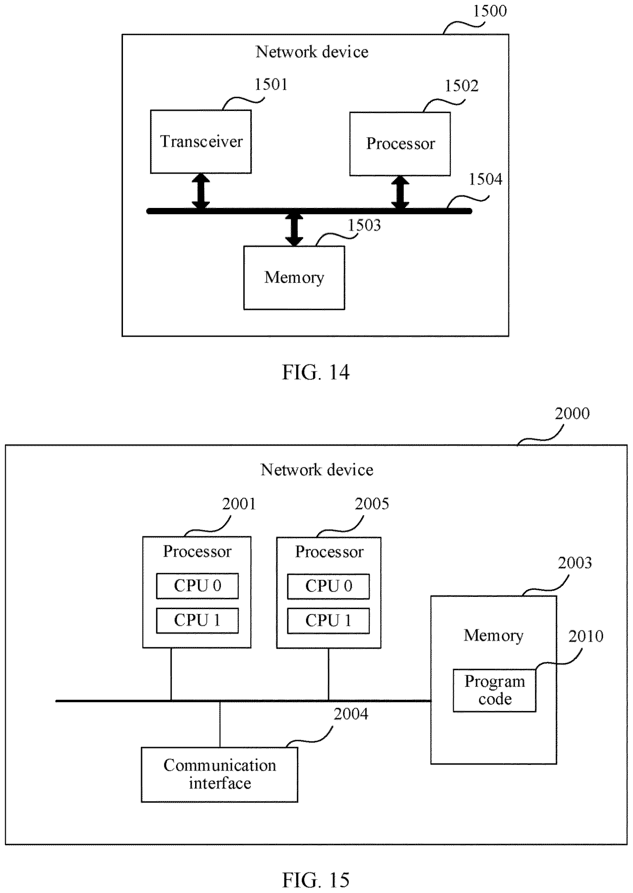

For a specific hardware structure of the device in the foregoing embodiments, refer to a network device 1500 shown in FIG. 14. The network device 1500 includes a transceiver 1501, a processor 1502, and a memory 1503. The transceiver 1501, the processor 1502, and the memory 1503 are connected to each other through a bus 1504. The transceiver 1501 is configured to receive a packet and send a packet. The memory 1503 is configured to store instructions or program code. The processor 1502 is configured to invoke the instructions or the program code in the memory 1503, to enable the device to perform related processing steps of the first network device or the third network device in the foregoing method embodiments. In a specific embodiment, the network device 1500 in this embodiment of this application may correspond to the first network device or the third network device in the foregoing method embodiments. The processor 1502 in the network device 1500 reads the instructions or the program code in the memory 1503, to enable the network device 1500 shown in FIG. 14 to perform a part or all of the operations performed by the first network device or the third network device.

In a specific embodiment, the network device 1500 in this embodiment of this application may correspond to the second network device or the forwarding module in the third network device in the foregoing method embodiments. The processor 1502 in the network device 1500 reads the instructions or the program code in the memory 1503, to enable the network device 1500 shown in FIG. 14 to perform a part or all of the operations performed by the second network device or the forwarding module in the third network device.

The network device 1500 may further correspond to the apparatuses in FIG. 12 and FIG. 13. For example, the sending module, the receiving module 1301, the first forwarding module, and the second forwarding module in FIG. 12 and FIG. 13 are equivalent to the transceiver 1501, and the generation module 1201 and the checking module 1302 in FIG. 12 and FIG. 13 are equivalent to the processor 1502.

FIG. 15 is a diagram of a structure of a network device 2000 according to an example embodiment of this application. The network device 2000 shown in FIG. 15 is configured to perform operations related to the method for generating an Ethernet frame in FIG. 6 and operations related to the method for processing an Ethernet frame in FIG. 11. The network device 2000 is, for example, a switch or a router.

As shown in FIG. 15, the network device 2000 includes at least one processor 2001, a memory 2003, and at least one communication interface 2004.

The processor 2001 is, for example, a general-purpose central processing unit (central processing unit, CPU), a digital signal processor (digital signal processor, DSP), a network processor (network processor, NP), a graphics processing unit (Graphics Processing Unit, GPU), a neural-network processing unit (neural-network processing unit, NPU), a data processing unit (Data Processing Unit, DPU), a microprocessor, or one or more integrated circuits configured to implement the solutions of this application. For example, the processor 2001 includes an application-specific integrated circuit (application-specific integrated circuit, ASIC), a programmable logic device (programmable logic device, PLD), or another programmable logic device, a transistor logic device, a hardware component, or any combination thereof. The PLD is, for example, a complex programmable logic device (complex programmable logic device, CPLD), a field programmable gate array (field programmable gate array, FPGA), generic array logic (generic array logic, GAL), or any combination thereof. The processor may implement or execute various logical blocks, modules, and circuits described with reference to the content disclosed in embodiments of the present invention. Alternatively, the processor may be a combination implementing a computing function, for example, a combination of one or more microprocessors or a combination of a DSP and a microprocessor.

Optionally, the network device 2000 further includes a bus. The bus is configured to transmit information between components of the network device 2000. The bus may be a peripheral component interconnect (peripheral component interconnect, PCI for short) bus, an extended industry standard architecture (extended industry standard architecture, EISA for short) bus, or the like. Buses may be classified into an address bus, a data bus, a control bus, and the like. For ease of representation, only one thick line is used to represent the bus in FIG. 15, but this does not mean that there is only one bus or only one type of bus. In addition to being connected through the bus, the components of the network device 2000 in FIG. 15 may alternatively be connected in another manner. A manner in which the components are connected is not limited in embodiments of the present invention.

The memory 2003 is, for example, a read-only memory (read-only memory, ROM) or another type of static storage device that can store static information and instructions, for another example, a random access memory (random access memory, RAM) or another type of dynamic storage device that can store information and instructions, for another example, an electrically erasable programmable read-only memory (electrically erasable programmable read-only Memory, EEPROM), a compact disc read-only memory (compact disc read-only memory, CD-ROM) or other compact disc storage, optical disk storage (including compact disc, laser disc, optical disc, digital versatile disc, Blu-ray disc, and the like), a magnetic disk storage medium or another magnetic storage device, or any other medium that can be used to carry or store expected program code in a form of instruction or data structure and that can be accessed by a computer, but is not limited thereto. For example, the memory 2003 exists independently, and is connected to the processor 2001 through the bus. Alternatively, the memory 2003 and the processor 2001 may be integrated together.

The communication interface 2004 uses any apparatus such as a transceiver, and is configured to communicate with another device or a communication network. The communication network may be an Ethernet, a radio access network (RAN), a wireless local area network (wireless local area network, WLAN), or the like. The communication interface 2004 may include a wired communication interface, and may further include a wireless communication interface. Specifically, the communication interface 2004 may be an Ethernet (Ethernet) interface, a fast Ethernet (Fast Ethernet, FE) interface, a gigabit Ethernet (Gigabit Ethernet, GE) interface, an asynchronous transfer mode (Asynchronous Transfer Mode, ATM) interface, a wireless local area network (wireless local area network, WLAN) interface, a cellular network communication interface, or a combination thereof. The Ethernet interface may be an optical interface, an electrical interface, or a combination thereof. In this embodiment of this application, the communication interface 2004 may be used by the network device 2000 to communicate with another device.

During specific implementation, in an embodiment, the processor 2001 may include one or more CPUs, for example, a CPU 0 and a CPU 1 in FIG. 15. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the network device 2000 may include a plurality of processors, for example, the processor 2001 and a processor 2005 in FIG. 15. Each of the processors may be a single-core processor (single-CPU) or may be a multi-core processor (multi-CPU). The processor herein may be one or more devices, circuits, and/or processing cores configured to process data (for example, computer program instructions).

During specific implementation, in an embodiment, the network device 2000 may further include an output device and an input device. The output device communicates with the processor 2001, and may display information in a plurality of manners. For example, the output device may be a liquid crystal display (liquid crystal display, LCD), a light-emitting diode (light-emitting diode, LED) display device, a cathode ray tube (cathode ray tube, CRT) display device, a projector (projector), or the like. The input device communicates with the processor 2001, and may receive an input from a user in a plurality of manners. For example, the input device may be a mouse, a keyboard, a touchscreen device, a sensing device, or the like.

In some embodiments, the memory 2003 is configured to store program code 2010 for executing the solutions of this application, and the processor 2001 may execute the program code 2010 stored in the memory 2003. In other words, the network device 2000 may implement, through the processor 2001 and the program code 2010 in the memory 2003, the packet methods in the method embodiments. The program code 2010 may include one or more software modules. Optionally, the processor 2001 may also store program code or instructions for executing the solutions of this application.

In a specific embodiment, the network device 2000 in this embodiment of this application may correspond to the first network device or the third network device in the foregoing method embodiments. The processor 2001 in the network device 2000 reads the program code 2010 in the memory 2003 or the program code or the instructions stored in the processor 2001, to enable the network device 2000 shown in FIG. 15 to perform a part of all of the operations performed by the first network device or the third network device.

In a specific embodiment, the network device 2000 in this embodiment of this application may correspond to the second network device or the forwarding module in the third network device in the foregoing method embodiments. The processor 2001 in the network device 2000 reads the program code 2010 in the memory 2003 or the program code or the instructions stored in the processor 2001, to enable the network device 2000 shown in FIG. 15 to perform a part or all of the operations performed by the second network device or the forwarding module in the third network device.

The network device 2000 may further correspond to the apparatuses in FIG. 12 and FIG. 13. Each functional module in the apparatuses in FIG. 12 and FIG. 13 is implemented by software of the network device 2000. In other words, the functional module included in the apparatuses in FIG. 12 and FIG. 13 is generated after the processor 2001 of the network device 2000 reads the program code 2010 stored in the memory 2003. For example, the sending module, the receiving module 1301, the first forwarding module, and the second forwarding module in FIG. 12 and FIG. 13 are equivalent to the communication interface 2004, and the generation module 1201 and the checking module 1302 are equivalent to the processor 2001 and/or the processor 2005.

Steps of the methods in FIG. 6 and FIG. 11 are completed by using an integrated logic circuit of hardware in a processor of the network device 2000, or by using instructions in a form of software. The steps of the methods disclosed with reference to embodiments of this application may be directly performed by a hardware processor, or may be performed using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory. The processor reads information in the memory, and completes the steps of the foregoing methods in combination with hardware of the processor. To avoid repetition, details are not described herein again.

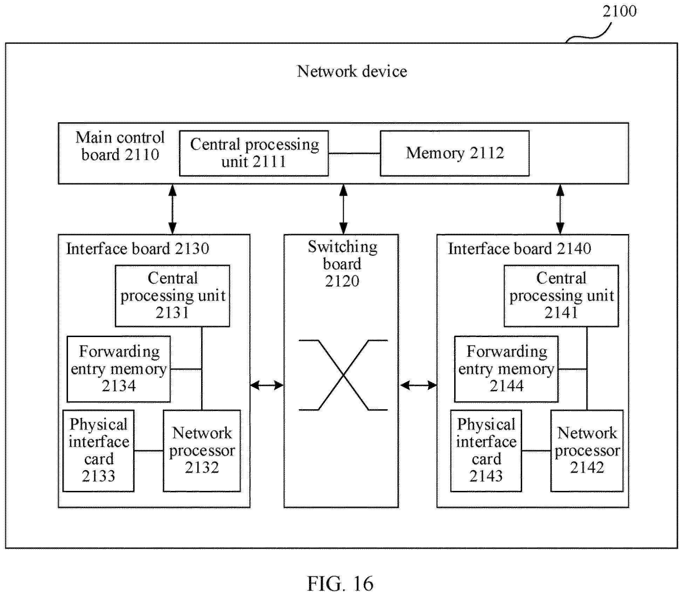

FIG. 16 is a diagram of a structure of a network device 2100 according to another example embodiment of this application. The network device 2100 shown in FIG. 16 is configured to perform a part or all of the operations in the methods in FIG. 6 and FIG. 11. The network device 2100 is, for example, a switch or a router. The network device 2100 may be implemented by a generic bus architecture.

As shown in FIG. 16, the network device 2100 includes a main control board 2110 and an interface board 2130.

The main control board is also referred to as a main processing unit (main processing unit, MPU) or a route processor card (route processor card). The main control board 2110 is configured to control and manage components in the network device 2100, including functions of route calculation, device management, device maintenance, and protocol processing. The main control board 2110 includes a central processing unit 2111 and a memory 2112.

The interface board 2130 is also referred to as a line processing unit (line processing unit, LPU), a line card (line card), or a service board. The interface board 2130 is configured to provide various service interfaces and implement data packet forwarding. The service interfaces include but are not limited to an Ethernet interface, a POS (Packet over SONET/SDH) interface, and the like. The Ethernet interface is, for example, flexible Ethernet clients (Flexible Ethernet Clients, FlexE Clients). The interface board 2130 includes a central processing unit 2131, a network processor 2132, a forwarding entry memory 2134, and a physical interface card (physical interface card, PIC) 2133.

The central processing unit 2131 on the interface board 2130 is configured to control and manage the interface board 2130 and communicate with the central processing unit 2111 on the main control board 2110.

The network processor 2132 is configured to implement packet sending processing. A form of the network processor 2132 may be a forwarding chip. The forwarding chip may be a network processor (network processor, NP). In some embodiments, the forwarding chip may be implemented by an application-specific integrated circuit (application-specific integrated circuit, ASIC) or a field programmable gate array (field programmable gate array, FPGA). Specifically, the network processor 2132 is configured to forward a received packet based on a forwarding table stored in the forwarding entry memory 2134. If a destination address of the packet is an address of the network device 2100, the network processor 2132 sends the packet to a CPU (for example, the central processing unit 2131) for processing. If a destination address of the packet is not an address of the network device 2100, the network processor 2132 finds, from a forwarding table based on the destination address, a next hop and an egress interface that correspond to the destination address, and forwards the packet to the egress interface corresponding to the destination address. Processing an uplink packet may include: processing the packet at an ingress interface, and searching a forwarding table. Processing a downlink packet may include: searching a forwarding table, and the like. In some embodiments, the central processing unit may also perform a function of a forwarding chip, for example, implement software forwarding based on a general-purpose CPU, so that the forwarding chip is not required in the interface board.

The physical interface card 2133 is configured to implement a physical layer interconnection function, so that original traffic enters the interface board 2130, and a processed packet is sent out from the physical interface card 2133. The physical interface card 2133 is also referred to as a subcard, may be installed on the interface board 2130, and is responsible for converting an optical/electrical signal into a packet, performing validity check on the packet, and then forwarding the packet to the network processor 2132 for processing. In some embodiments, the central processing unit 2131 may also perform a function of the network processor 2132, for example, implement software forwarding based on a general-purpose CPU, so that the network processor 2132 is not required in the physical interface card 2133.

Optionally, the network device 2100 includes a plurality of interface boards. For example, the network device 2100 further includes an interface board 2140. The interface board 2140 includes a central processing unit 2141, a network processor 2142, a forwarding entry memory 2144, and a physical interface card 2143. Functions and implementations of components in the interface board 2140 are the same as or similar to those of the interface board 2130, and details are not described herein again.

Optionally, the network device 2100 further includes a switching board 2120. The switching board 2120 may also be referred to as a switch fabric unit (switch fabric unit, SFU). When the network device has the plurality of interface boards, the switching board 2120 is configured to perform data exchange between the interface boards. For example, the interface board 2130 and the interface board 2140 may communicate with each other through the switching board 2120.

The main control board 2110 is coupled to the interface board. For example, the main control board 2110, the interface board 2130, the interface board 2140, and the switching board 2120 are connected to a system backboard through a system bus for interworking. In a possible implementation, an inter-process communication (inter-process communication, IPC) protocol channel is established between the main control board 2110 and the interface board 2130, and between the main control board 2110 and the interface board 2140. The main control board 2110 communicates with the interface board 2130 and the interface board 2140 through IPC channels.

Logically, the network device 2100 includes a control plane and a forwarding plane. The control plane includes the main control board 2110 and the central processing unit 2111. The forwarding plane includes components such as the forwarding entry memory 2134, the physical interface card 2133, and the network processor 2132 that perform forwarding. The control plane performs functions such as a function of a router, a function of generating a forwarding table, a function of processing signaling and protocol packets, and a function of configuring and maintaining a state of the network device. The control plane delivers the generated forwarding table to the forwarding plane. On the forwarding plane, the network processor 2132 searches, based on the forwarding table delivered by the control plane, a table for forwarding the packet received by the physical interface card 2133. The forwarding table delivered by the control plane may be stored in the forwarding entry memory 2134. In some embodiments, the control plane and the forwarding plane may be completely separated, and are not on a same network device.

It should be noted that there may be one or more main control boards, and when there are a plurality of main control boards, a primary main control board and a secondary main control board may be included. There may be one or more interface boards. A network device with a stronger data processing capability provides a larger quantity of interface boards. There may also be one or more physical interface cards on the interface board. There may be no switching board or one or more switching boards. When there are a plurality of switching boards, load balancing and redundancy backup may be implemented together. In a centralized forwarding architecture, a network device may not need a switching board, and an interface board performs a function of processing service data of an entire system. In a distributed forwarding architecture, a network device may have at least one switching board, and implements data exchange between a plurality of interface boards through the switching board, to provide a large-capacity data exchange and processing capability. Therefore, a data access and processing capability of a network device of a distributed architecture is greater than that of a network device of a centralized architecture. Optionally, a form of the network device may alternatively be a single board. To be specific, there is no switching board, and functions of the interface board and the main control board are integrated into the board. In this case, the central processing unit on the interface board and the central processing unit on the main control board may be combined into one central processing unit on the board. The one central processing unit on the board performs functions of the two central processing units existing after the two central processing units are combined. The network device in this form has low data exchange and processing capabilities (for example, a network device such as a low-end switch or router). A specific architecture that is to be used depends on a specific networking deployment scenario. This is not limited herein.

In a specific embodiment, the network device 2100 corresponds to the apparatuses in FIG. 12 and FIG. 13. In some embodiments, the sending module, the receiving module 1301, the first forwarding module, and the second forwarding module that are in the apparatuses in FIG. 12 to FIG. 13 are equivalent to the physical interface card 2133 or the physical interface card 2143 in the network device 2100. The generation module 1201 and the checking module 1302 that are in the apparatuses in FIG. 12 to FIG. 13 are equivalent to at least one of the central processing unit 2111, the network processor 2132, and the network processor 2142 that are in the network device 2100.

Based on the apparatuses in FIG. 12 and FIG. 13, an embodiment of this application further provides a system for processing an Ethernet frame. The system includes an apparatus for generating an Ethernet frame and an apparatus for processing an Ethernet frame.

Optionally, the apparatus for generating an Ethernet frame is the apparatus for generating an Ethernet frame in FIG. 12, and the apparatus for processing an Ethernet frame is the apparatus for processing an Ethernet frame in FIG. 13.

For methods performed by the apparatus for generating an Ethernet frame and the apparatus for processing an Ethernet frame, refer to related descriptions in the embodiments shown in FIG. 1, FIG. 6, FIG. 10, and FIG. 11. Details are not described herein again.

Based on the network devices in FIG. 14, FIG. 15, and FIG. 16, an embodiment of this application further provides a system for processing an Ethernet frame. The system includes a first network device and a second network device. Optionally, the first network device is the network device 1500 in FIG. 14, the network device 2000 in FIG. 15, or the network device 2100 in FIG. 16, and the second network device is the network device 1500 in FIG. 14, the network device 2000 in FIG. 15, or the network device 2100 in FIG. 16.

For methods performed by the first network device and the second network device, refer to related descriptions in the embodiments shown in FIG. 1, FIG. 6, FIG. 10, and FIG. 11. Details are not described herein again.

It should be understood that the foregoing processor may be a central processing unit (Central Processing Unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor or any conventional processor or the like. It should be noted that the processor may be a processor that supports an advanced reduced instruction set computing machines (advanced RISC machines, ARM) architecture.

Further, in an optional embodiment, the memory may include a read-only memory and a random access memory, and provide instructions and data for the processor. The memory may further include a non-volatile random access memory. For example, the memory may further store information about a device type.

The memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs are available, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

A computer-readable storage medium is further provided. The storage medium stores at least one program instruction or code. When the program instruction or the code is loaded and executed by a processor, a computer is enabled to implement the method for generating an Ethernet frame in any one of FIG. 6 or the method for processing an Ethernet frame in FIG. 11.

This application provides a computer program (product). When a computer program is executed by a computer, a processor or the computer may be enabled to perform corresponding steps and/or procedures in the foregoing method embodiments.

A chip is provided, and includes a processor. The chip is configured to invoke, from a memory, and run instructions stored in the memory, to enable a communication device with the chip installed to perform the methods in the foregoing aspects.

Another chip is provided, and includes an input interface, an output interface, a processor, and a memory. The input interface, the output interface, the processor, and the memory are connected to each other through an internal connection path. The processor is configured to execute code in the memory. When the code is executed, the processor is configured to perform the methods in the foregoing aspects.

A device is further provided. The device includes the foregoing chip. Optionally, the device is a network device. For example, the device is a router, a switch, or a server.

A data structure is provided, and includes an Ethernet frame, where the Ethernet frame includes a protection field, a protection range of the protection field includes a destination media access control MAC address field in the Ethernet frame, and a location of the protection field in the data structure is before a location of a frame check sequence FCS field of the Ethernet frame in the data structure.

Apart or all of the foregoing embodiments may be implemented by software, hardware, firmware, or any combination thereof. When the software is used to implement the embodiments, a part or all of the embodiments may be implemented in a form of computer program product. The computer program product includes one or more computer instructions. When the computer program instructions are loaded and executed on a computer, the procedures or functions according to this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk Solid-State Disk), or the like.

In the foregoing specific implementations, the objectives, technical solutions, and beneficial effects that are of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

A person of ordinary skill in the art may be aware that, with reference to the method steps and modules described in embodiments disclosed in this specification, the method steps and modules can be implemented by software, hardware, firmware, or any combination thereof. To clearly describe interchangeability between the hardware and the software, the steps and compositions of embodiments have been generally described in terms of functions in the foregoing descriptions. Whether the functions are performed by the hardware or the software depends on particular applications and design constraints that are of the technical solutions. A person of ordinary skill in the art may use different methods to implement the described functions for each particular application, but it should not be considered that the implementation goes beyond the scope of this application.

A person of ordinary skill in the art may understand that a part or all of the steps of embodiments may be completed by hardware or a program instructing related hardware. The program may be stored in a computer-readable storage medium. The storage medium may be a read-only memory, a magnetic disk, an optical disc, or the like.

When the software is used to implement the method steps and modules, a part or all of the method steps and modules may be implemented in a form of computer program product. The computer program product includes one or more computer program instructions. In an example, the methods according to embodiments of this application may be described in the context of machine-executable instructions. For example, the machine-executable instructions are included in a program module that is in a component for execution on a real or virtual processor of a target. Generally, the program module includes a routine, a program, a library, an object, a class, a component, a data structure, and the like, and executes a specific task or implements a specific abstract data structure. In various embodiments, functions of the program modules may be combined or split between the described program modules. The machine-executable instructions for the program module may be executed locally or within a distributed device. In the distributed device, the program module may be located in both a local storage medium and a remote storage medium.

Computer program code for implementing the methods in embodiments of this application may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, partly on a computer, as a standalone software package, partly on a computer and partly on a remote computer, or entirely on a remote computer or a server.

In the context of embodiments of this application, computer program code or related data may be carried in any appropriate carrier, so that the device, the apparatus, or the processor can perform various types of processing and operations described above. Examples of the carrier include a signal, a computer-readable medium, and the like.

Examples of the signal may include an electrical signal, an optical signal, a radio signal, a voice signal, or other forms of propagated signals, such as a carrier wave and an infrared signal.

A machine-readable medium may be any tangible medium that includes or stores programs for or with respect to an instruction execution system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any appropriate combination thereof. A more detailed example of the machine-readable storage medium includes an electrical connection with one or more wires, a portable computer disk, a hard disk, a random access memory (RAM), a read-only memory (ROM), an erasable programmable read-only memory (EPROM or flash memory), an optical storage device, a magnetic storage device, or any appropriate combination thereof.

It may be clearly understood by a person skilled in the art that, for the purpose of convenient and brief description, for a detailed working process of the foregoing described system, device, and module, refer to a corresponding process in the foregoing method embodiments. Details are not described herein again.

In the several embodiments provided in this application, it should be understood that the disclosed system, device, and method may be implemented in other manners. For example, the foregoing described device embodiment is merely an example. For example, division into modules is merely logical function division and may be another division manner during actual application. For example, a plurality of modules or components may be combined or may be integrated into another system, or some features may be ignored or not executed. In addition, the displayed or discussed mutual couplings or direct couplings or communication connections may be indirect couplings or communication connections implemented through some interfaces, devices, or modules, or may be electrical, mechanical, or other forms of connections.

The modules described as separate parts may or may not be physically separate, and parts displayed as modules may or may not be physical modules, to be specific, may be located at one position, or may be distributed on a plurality of network modules. A part or all of the modules may be selected based on actual requirements to implement the objectives of the solutions of embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of software functional module.

If the integrated module is implemented in the form of software functional module and sold or used as an independent product, the integrated module may be stored in a computer-readable storage medium. Based on this understanding, the technical solutions of this application essentially, or the part contributing to the conventional technology, or a part or all of the technical solutions may be implemented in a form of software product. The computer software product is stored in a storage medium, and includes several instructions for instructing a computer device (which may be a personal computer, a server, a network device, or the like) to perform a part or all of the steps of the methods described in embodiments of this application. The foregoing storage medium includes any medium such as a USB flash drive, a removable hard disk, a read-only memory (read-only memory, ROM), a random access memory (random access memory, RAM), a magnetic disk, or an optical disc that can store program code.

The terms such as "first" and "second" in this application are used to distinguish between same or similar items with basically same roles and functions. It should be understood that there is no logical or timing dependency between "first", "second", and "n^{th}", and neither a quantity nor an execution sequence is limited. It should be further understood that, although the following descriptions use terms such as "first" and "second" to describe various elements, these elements should not be limited by the terms. These terms are simply used to distinguish one element from another. For example, without departing from the scope of the various examples, a first network device may be referred to as a second network device, and similarly, a second network device may be referred to as a first network device. The first network device and the second network device may be network devices of any type, and in some cases, may be separate and different network devices.

It should be further understood that, in embodiments of this application, sequence numbers of the processes do not mean execution sequences. The execution sequences of the processes should be determined based on functions and internal logic of the processes, and should not be construed as any limitation on implementation processes of embodiments of this application.

In this application, the term "at least one" means one or more, and the term "a plurality of" in this application means two or more. For example, a plurality of second packets mean two or more second packets. The terms "system" and "network" in this specification are often used interchangeably.

It should be understood that the terms used in the descriptions of the various examples in this specification are merely intended to describe specific examples and are not intended to impose a limitation. The terms "one" ("a" and "an") and "the" of singular forms used in the descriptions of the various examples and the appended claims are also intended to include plural forms, unless otherwise specified in the context clearly.

It should be further understood that the term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or groups thereof not excluded.

It should be further understood that the terms "if" and "in case" may be interpreted as a meaning of "when" ("when" or "upon") or "in response to determining" or "in response to detecting". Similarly, according to the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

It should be understood that determining B based on A does not mean that B is determined based only on A, and B may alternatively be determined based on A and/or other information.

It should be further understood that "one embodiment", "an embodiment", and "a possible implementation" mentioned throughout this specification mean that a specific feature, structure, or characteristic related to the embodiment or an implementation is included in at least one embodiment of this application. Therefore, "in one embodiment" or "in an embodiment" or "a possible implementation" appearing throughout this specification may not necessarily refer to a same embodiment. In addition, these particular features, structures, or characteristics may be combined in one or more embodiments by using any appropriate manner.

## Claims

1. A method for generating an Ethernet frame, wherein the method comprises:
generating the Ethernet frame, wherein the Ethernet frame comprises a protection field, a protection range of the protection field comprises a destination media access control MAC address field in the Ethernet frame, and a location of the protection field in the Ethernet frame is before a location of a frame check sequence FCS field of the Ethernet frame in the Ethernet frame.

2. The method according to claim 1, wherein the location of the protection field in the Ethernet frame is determined based on a location of a target field, and the location of the target field is before the location of the protection field in the Ethernet frame.

3. The method according to claim 2, wherein the target field is a start of frame delimiter SFD field.

4. The method according to claim 1, wherein the Ethernet frame further comprises an Ethernet type field, and the Ethernet type field indicates the location of the protection field in the Ethernet frame.

5. The method according to any one of claims 1 to 4, wherein the protection range further comprises a source MAC address field and/or the Ethernet type field.

6. The method according to any one of claims 1 to 5, wherein the Ethernet frame further comprises at least one tag field.

7. The method according to claim 6, wherein the protection range further comprises the at least one tag field.

8. The method according to any one of claims 1 to 7, wherein information about the protection field is obtained by performing cyclic redundancy check CRC calculation on information within the protection range.

9. The method according to any one of claims 1 to 7, wherein information about the protection field is obtained by performing forward error correction FEC code calculation on information within the protection range.

10. The method according to any one of claims 1 to 9, wherein the protection field is located in a payload field in the Ethernet frame.

11. The method according to any one of claims 1 to 10, wherein after the generating the Ethernet frame, the method further comprises:
sending the Ethernet frame.

12. A method for processing an Ethernet frame, wherein the method comprises:
receiving a plurality of bytes in the Ethernet frame, wherein the plurality of bytes comprise information about a destination media access control MAC address field and information about a protection field; and
checking information within a protection range of the protection field based on the information about the protection field, wherein the protection range comprises the destination MAC address field, and a location of the protection field in the Ethernet frame is before a location of a frame check sequence FCS field of the Ethernet frame in the Ethernet frame.

13. The method according to claim 12, wherein after the checking information within a protection range of the protection field based on the information about the protection field, the method further comprises:
in response to that the information within the protection range passes the check, forwarding the plurality of bytes based on the information about the destination MAC address field.

14. The method according to claim 12, wherein after the checking information within a protection range of the protection field based on the information about the protection field, the method further comprises:
in response to that the information within the protection range does not pass the check, after receiving all bytes of the Ethernet frame, checking the Ethernet frame based on information about the FCS field; and
in response to that the Ethernet frame passes the check, forwarding the Ethernet frame based on the information about the destination MAC address field.

15. The method according to any one of claims 12 to 14, wherein before the checking information within a protection range of the protection field based on the information about the protection field, the method further comprises:
determining the location of the protection field in the Ethernet frame based on a location of a target field, wherein the location of the target field is before the location of the protection field in the Ethernet frame.

16. The method according to claim 15, wherein the target field is a start of frame delimiter SFD field.

17. The method according to any one of claims 12 to 14, wherein the Ethernet frame further comprises an Ethernet type field, and the Ethernet type field indicates the location of the protection field in the Ethernet frame; and
before the checking information within a protection range of the protection field based on the information about the protection field, the method further comprises:
determining the location of the protection field in the Ethernet frame based on the Ethernet type field.

18. The method according to any one of claims 12 to 17, wherein the protection range further comprises a source MAC address field and/or the Ethernet type field.

19. The method according to any one of claims 12 to 18, wherein the Ethernet frame further comprises at least one tag field.

20. The method according to claim 19, wherein the protection range further comprises the at least one tag field.

21. The method according to any one of claims 12 to 20, wherein the information about the protection field is obtained by performing cyclic redundancy check CRC calculation on the information within the protection range.

22. The method according to any one of claims 12 to 20, wherein the information about the protection field is obtained by performing forward error correction FEC code calculation on the information within the protection range.

23. The method according to any one of claims 12 to 22, wherein the protection field is located in a payload field in the Ethernet frame.

24. An apparatus for generating an Ethernet frame, wherein the apparatus comprises:
a generation module, configured to generate the Ethernet frame, wherein the Ethernet frame comprises a protection field, a protection range of the protection field comprises a destination media access control MAC address field in the Ethernet frame, and a location of the protection field in the Ethernet frame is before a location of a frame check sequence FCS field of the Ethernet frame in the Ethernet frame.

25. The apparatus according to claim 24, wherein the location of the protection field in the Ethernet frame is determined based on a location of a target field, and the location of the target field is before the location of the protection field in the Ethernet frame.

26. The apparatus according to claim 25, wherein the target field is a start of frame delimiter SFD field.

27. The apparatus according to claim 24, wherein the Ethernet frame further comprises an Ethernet type field, and the Ethernet type field indicates the location of the protection field in the Ethernet frame.

28. The apparatus according to any one of claims 24 to 27, wherein the protection range further comprises a source MAC address field and/or the Ethernet type field.

29. The apparatus according to any one of claims 24 to 28, wherein the Ethernet frame further comprises at least one tag field.

30. The apparatus according to claim 29, wherein the protection range further comprises the at least one tag field.

31. The apparatus according to any one of claims 24 to 30, wherein information about the protection field is obtained by performing cyclic redundancy check CRC calculation on information within the protection range.

32. The apparatus according to any one of claims 24 to 30, wherein information about the protection field is obtained by performing forward error correction FEC code calculation on information within the protection range.

33. The apparatus according to any one of claims 24 to 32, wherein the protection field is located in a payload field in the Ethernet frame.

34. The apparatus according to any one of claims 24 to 33, wherein the apparatus further comprises:
a sending module, configured to send the Ethernet frame.

35. An apparatus for processing an Ethernet frame, wherein the apparatus comprises:
a receiving module, configured to receive a plurality of bytes in the Ethernet frame, wherein the plurality of bytes comprise information about a destination media access control MAC address field and information about a protection field; and
a checking module, configured to check information within a protection range of the protection field based on the information about the protection field, wherein the protection range comprises the destination MAC address field, and a location of the protection field in the Ethernet frame is before a location of a frame check sequence FCS field of the Ethernet frame in the Ethernet frame.

36. The apparatus according to claim 35, wherein the apparatus further comprises:
a first forwarding module, configured to: in response to that the information within the protection range passes the check, forward the plurality of bytes based on the information about the destination MAC address field.

37. The apparatus according to claim 35, wherein the checking module is further configured to: in response to that the information within the protection range does not pass the check, after receiving all bytes of the Ethernet frame, check the Ethernet frame based on information about the FCS field; and
the apparatus further comprises: a second forwarding module, configured to: in response to that the Ethernet frame passes the check, forward the Ethernet frame based on the information about the destination MAC address field.

38. The apparatus according to any one of claims 35 to 37, wherein the checking module is further configured to determine the location of the protection field in the Ethernet frame based on a location of a target field, wherein the location of the target field is before the location of the protection field in the Ethernet frame.

39. The apparatus according to claim 38, wherein the target field is a start of frame delimiter SFD field.

40. The apparatus according to any one of claims 35 to 37, wherein the Ethernet frame further comprises an Ethernet type field, and the Ethernet type field indicates the location of the protection field in the Ethernet frame; and
the checking module is further configured to determine the location of the protection field in the Ethernet frame based on the Ethernet type field.

41. The apparatus according to any one of claims 35 to 40, wherein the protection range further comprises a source MAC address field and/or the Ethernet type field.

42. The apparatus according to any one of claims 35 to 41, wherein the Ethernet frame further comprises at least one tag field.

43. The apparatus according to claim 42, wherein the protection range further comprises the at least one tag field.

44. The apparatus according to any one of claims 35 to 43, wherein the information about the protection field is obtained by performing cyclic redundancy check CRC calculation on the information within the protection range.

45. The apparatus according to any one of claims 35 to 43, wherein the information about the protection field is obtained by performing forward error correction FEC code calculation on the information within the protection range.

46. The apparatus according to any one of claims 35 to 45, wherein the protection field is located in a payload field in the Ethernet frame.

47. A network device, wherein the network device comprises a processor, the processor is coupled to a memory, the memory stores at least one program instruction or code, and the at least one program instruction or the code is loaded and executed by the processor, to enable the network device to implement the method according to any one of claims 1 to 23.

48. A system for processing an Ethernet frame, wherein the system comprises a first network device and a second network device, the first network device is configured to perform the method according to any one of claims 1 to 11, and the second network device is configured to perform the method according to any one of claims 12 to 23.

49. A computer-readable storage medium, wherein the storage medium stores at least one program instruction or code; and when the program instruction or the code is loaded and executed by a processor, a computer is enabled to implement the method according to any one of claims 1 to 23.

50. A chip, comprising a processor, wherein the processor is configured to implement the method according to any one of claims 1 to 23.

51. A device, comprising the chip according to claim 50.

52. The device according to claim 51, wherein the device is a network device.

53. The device according to claim 51 or 52, wherein the device is a router, a switch, or a server.

54. A network system, comprising the device according to any one of claims 51 to 53.

55. A computer program product, comprising a computer program or code, wherein when the computer program or the code is executed by a computer, the computer is enabled to perform the method according to any one of claims 1 to 23.

56. A data structure, comprising an Ethernet frame, wherein the Ethernet frame comprises a protection field, a protection range of the protection field comprises a destination media access control MAC address field in the Ethernet frame, and a location of the protection field in the data structure is before a location of a frame check sequence FCS field of the Ethernet frame in the data structure.
